# EUROPEAN PATENT APPLICATION

(11) **EP 1 717 505 A2**
(43) Date of publication of application: **02.11.2006**
(21) Application number: 06006337.7
(22) Date of filing: 28.03.2006
(51) Int. Cl.: F16L 47/02, B29C 65/34

(54) **Sleeve for protection and strengthening of head-to-head welds of plastic pipes**

(30) Priority: 27.04.2005 IT MI20050150
(71) Applicant: GECO SYSTEM S.p.A., 21052 Busto Arsizio VA (IT)
(72) Inventor: Genoni, Marco, 20020 Arese MI (IT); Petrucelli, Arturo, 21052 Busto Arsizio VA (IT)
(74) Representative: Faraggiana, Vittorio

(57) **Abstract**

A heat-sealable sleeve (10) for protection and strengthening of head-to-head joints of a pipe (13) of plastic material is made up of two mutually connectable halves (11, 12) for wrapping a pipe. The halves have on the internal face in an intermediate position between the ends of a circumferential groove designed to receive the head-to-head joint of the pipe on which the sleeve is installed. Each half has two longitudinal flanges (17, 18, 19, 20) projecting radially for coupling with and fastening to corresponding flanges of the other half. The union comprises on the internal face zones for electrical thermofusion for adhesion to the pipe connected to outward-facing terminals (25 to 32) for their electrical power supply. Advantageously, the flanges also have mutual thermoadhesion zones by means of electrical power supply through terminals (35, 36).

## Description

This invention relates to an innovative heat-sealable sleeve for protection and strengthening of head-to-head joints of plastic pipes.

In the technology of plastic ducts for fluid, the connection system for ducts by head-to-head weld realized in general with special tooling which appropriately heats the two duct heads to be jointed to soften the plastic material and then press them together so as to weld them to each other is known.

For various reasons, on a later examination the joints thus realized can appear defective or in any case raise doubts concerning their reliability. Especially, if this is detected after fitting of the piping, it might be very difficult and costly to restore the fitness of the joint.

The general purpose of this invention is to remedy the above-mentioned shortcomings by making available a heat-sealable sleeve suitable for incorporating and restoring the joint rapidly and economically.

In view of this purpose, for protection and strengthening of head-to-head joints of plastic pipes, it was sought to provide in accordance with this invention a heat-sealable sleeve made up of two mutually connectable halves for wrapping a pipe and having on the internal face in an intermediate position between the ends a circumferential groove designed to receive the head-to-head joint of the pipe on which it is installed with each half having two longitudinal flanges projecting radially for coupling with and fastening to corresponding flanges of the other half and, for adhesion to the pipe, comprising on the internal face electric thermofusion zones connected to outward-facing terminals for their electrical power supply.

To clarify the explanation of the innovative principles of this invention and its advantages compared with the prior art there is described below with the aid of the annexed drawings a possible embodiment thereof by way of non-limiting example applying said principles. In the drawings:
FIG 1 shows an exploded diagrammatic perspective view of a sleeve in accordance with this invention,
FIG 2 shows a longitudinal cross-sectional view of the sleeve of FIG 1,
FIG 3 shows a cross section of the disassembled sleeve along line of cut III-III of FIG 2, and
FIG 4 shows a view similar to FIG 1 but with a realization variant.

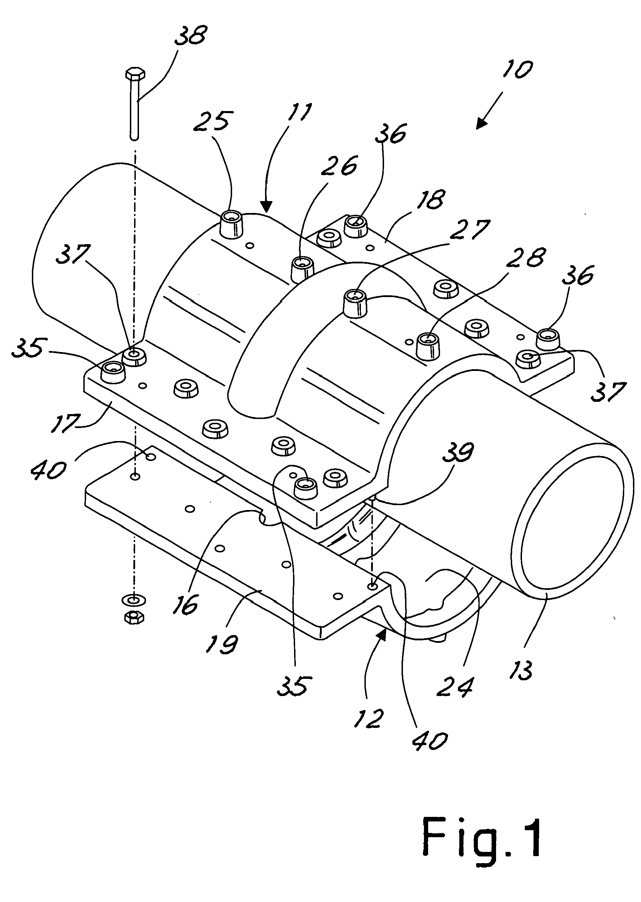

With reference to the figures, FIG 1 shows designated as a whole by reference number 10 a heat-sealable sleeve realized in accordance with this invention for protection and strengthening of head-to-head joints of plastic pipes, for example, polyethylene.

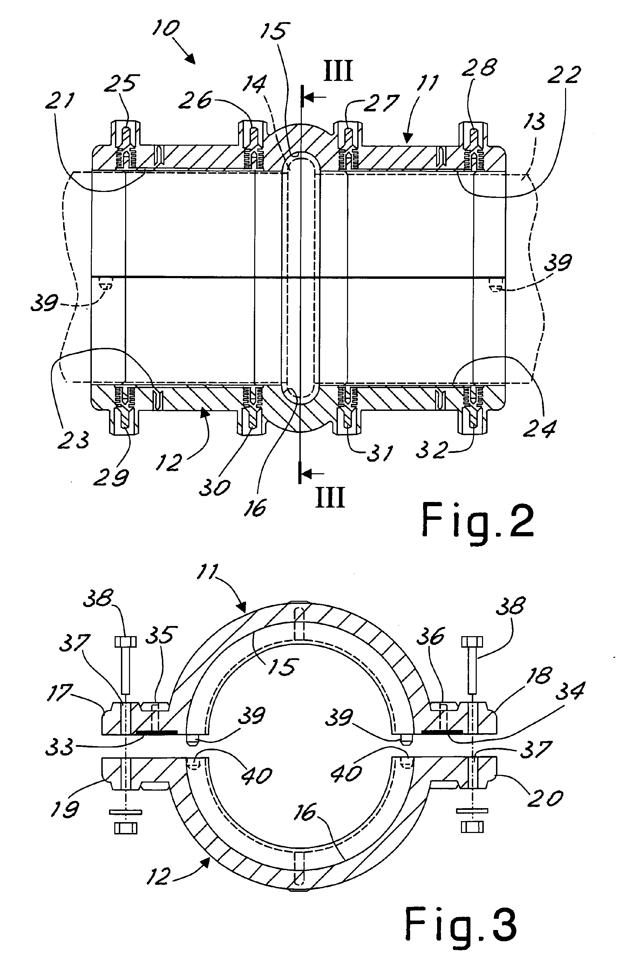

The sleeve 10 is formed of two halves 11, 12 in the form of the letter C which are mutually couplable to wrap a pipe 13 at a head-to-head weld thereof indicated generally by reference number 14 in FIG 2.

On the internal face and in an intermediate position between the ends the two halves have a circumferential groove 15, 16 which realizes a ring when the two halves are coupled and which is designed to receive the head-to-head joint of the pipe on which the sleeve is installed in such a manner that the semi cylindrical internal walls of the two halves can adhere circumferentially to the pipe on the two sides of the head-to-head weld. The groove also serves to have correct centering of the sleeve astride the weld.

The two halves have electrical thermofusion zones 21, 22, 23, 24 on the internal face for adhesion on the pipe. These zones are connected to terminals 25 to 32 facing outward for their appropriate electrical power supply by means of a known power supply apparatus for thermofusion (not shown).

Each half also comprises two longitudinal flanges respectively 17, 18, 19, 20 projecting radially for coupling with the other half.

The thermofusion zones are realized in accordance with the prior art of thermofusion unions, for example with a layer of appropriate thermofusible material (such as polyethylene) in which are buried heat-resistant conductors.

Advantageously the terminals can be a pair for each thermofusion zone. The zones are advantageously arranged each on an entire internal surface of one half for reception of the pipe on each side of the groove so that each half comprises two zones separated by the groove.

Advantageously, for fastening between corresponding flanges on the to halves, at least one flange of the pair (17, 19 or 18, 20) comprises electrical thermofusion zones 33, 34 (similar to the zones inside the sleeve) on a face designed for contact with the corresponding flange of the other half. Said zones are also connected to respective pairs of terminals 35, 36 facing outward for their electrical power supply for the electrical thermofusion.

Preferably the thermofusion zones on the flanges are only on the two flanges of a same half (the half 11 in the figures). Advantageously the power supply terminals of the thermofusion zones on the flanges are arranged on an external face of the respective flange so as to limit the length of the connections and not generate confusion during installation of the sleeve.

As an alternative or in addition, the flanges comprise through holes 37 distributed along the flanges for insertion of screws 38 for coupled clamping between the corresponding flanges of the two halves. In place of the clamping screws 38 or in addition thereto there can be provide other clamping means such as advantageously C clamps or staples, for example, three per side of the sleeve and applied superimposed on the flanges of the two C halves to ensure their firm coupling.

Advantageously at least one of the two halves comprises guide pins 39 projecting for engagement in corresponding seats 40 in the other half when the two halves are correctly coupled.

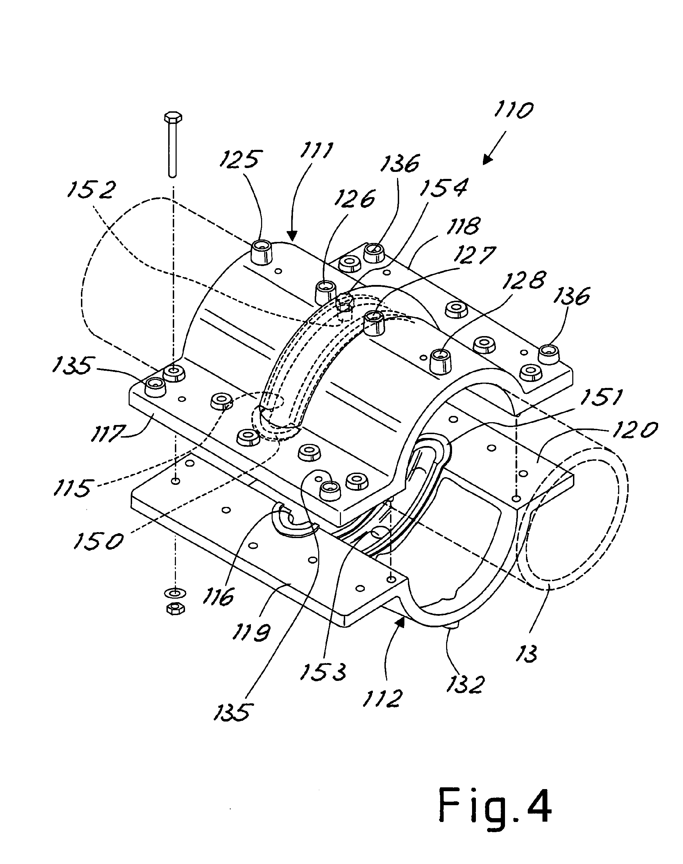

FIG 4 shows a realization variant of a heat-sealable sleeve realized in accordance with this invention for protection and strengthening of head-to-head joints of plastic pipes, for example, polyethylene. For the sake of clarity, main parts of the sleeve 110 of FIG 4 similar to those of the sleeve 10 of FIG 1 are designated by the same numbering as in FIG 1 increased by 100.

The sleeve 110 is therefore made up of two C-shape halves 111, 112 which are mutually couplable for wrapping the pipe 13 receiving its head-to-head weld at the circumferential groove 115, 116. Closing flanges 117, 118 and 119, 120 project radially from the two halves.

The two halves have thermofusion zones similar to those of the first realization and connected to terminals 125-132 and 135-136 for electrical power supply of thermofusion for sealing of the pipe.

The main difference in the realization of FIG 4 as regards the realization of FIG 1 lies in the fact that each groove 115, 116 has an edge surrounded by a respective annular gasket part 150, 151 in such a manner that when the union is closed on the pipe, thanks to the gaskets the annular weld of the pipe is well insulated and sealed inside the complete circumferential groove 115, 116 before melting of the sleeve on the pipe. Advantageously , the gaskets are soft gaskets partially received in a complementary groove on the surface of the sleeve to avoid lateral shifting. The gaskets must ensure only a temporary seal since after melting of the sleeve they are no longer necessary. Their purpose is to allow assembly of the sleeve on the pipe with head-to-head weld which it loses, avoiding the lost fluid penetrating under pressure between the surfaces of the pipe and the sleeve, which are still to be welded together.

Advantageously, to facilitate the temporary seal of the gaskets, at least one of the two half-shells of the sleeve can have an outlet 152, 153 at the groove 115, 116 to avoid the space in the groove going under pressure. After welding, the outlet (or each outlet) is closed and sealed with an appropriate plug 154, for example, screwed. During assembly of the sleeve, on the outlet there can also be connected a duct (not shown) for sending the fluid far from the working zone.

It is now clear that the preset purposes have been achieved. With a sleeve in accordance with this invention, once a head-to-head weld believed to be, for example, defective or doubtful is identified and is believed necessary to incorporate, it suffices to connect the two sleeve halves on the pipe so that the weld bead is housed in the internal annular groove. While the two halves are held in place pressed against each other, the various terminals of the weld zone are connected to the appropriate electrical power supply so that the sleeve is welded onto the pipe to incorporate the head-to-head weld. The two halves of the union can be pressed and kept united by means of screws if called for. If heat-welding is called for on the flanges also, the appropriate terminals are connected to the appropriate electrical power supply.

When the installation operations are terminated, the head-to-head weld is incorporated and completely sealed in the sleeve and all danger of collapse and loss is averted. If the sleeve 110 was used, the outlets are appropriately sealed.

Naturally the above description of an embodiment applying the innovative principles of this invention is given by way of non-limiting example of said principles within the scope of the exclusive right claimed here. For example, the proportions and dimensions of the various parts can vary depending on the specific requirements in addition obviously to the diameter of the pipe to which the sleeve is to be applied. For low pressures, the outlets can also be present without true gaskets around the grooves.

## Claims

1. Heat-sealable sleeve for protection and strengthening of head-to-head joints of plastic pipes made up of two mutually connectable halves for wrapping a pipe and having on the internal face in an intermediate position between the ends a circumferential groove designed to receive the head-to-head joint of the pipe on which it is installed with each half having two longitudinal flanges projecting radially for coupling with and fastening to corresponding flanges of the other half and comprising on the internal face electric thermofusion zones for adhesion to the pipe and connected to outward-facing terminals for their electrical power supply.

2. Sleeve in accordance with claim 1 **characterized in that** for fastening between corresponding flanges on the two halves, at least one flange of the pair comprises electrical thermofusion zones on one face designed for contact with the corresponding flange of the other half with said zones being connected to terminals facing outward for their electrical power supply.

3. Sleeve in accordance with claim 2 **characterized in that** the thermofusion zones on the flanges are present on the two flanges of a same half and not on the flanges of the other half.

4. Sleeve in accordance with claim 1 **characterized in that** thermofusion zones for adhesion on the pipe are arranged on the two sides of the circumferential groove.

5. Sleeve in accordance with claim 2 **characterized in that** the power supply terminals of the thermofusion zones on the flanges are arranged on an external face of the respective flange.

6. Sleeve in accordance with claim 1 **characterized in that** on the flanges are placed means of clamping coupled between the corresponding flanges of the two halves.

7. Sleeve in accordance with claim 6 **characterized in that** the clamping means comprise through clamping screws opposite holes in the flanges.

8. Sleeve in accordance with claim 1 **characterized in that** at least one of the two halves includes guide pins projecting to engage in corresponding seats in the other half when the two halves are correctly coupled.

9. Sleeve in accordance with claim 1 **characterized by** having sealing gaskets around the circumferential groove to insulate a head-to-head joint of a pipe in the groove from the thermofusion zones upon clamping of the sleeve on the pipe.

10. Sleeve in accordance with claim 9 **characterized in that** the sealing gaskets comprise for each half of the sleeve an annular gasket surrounding the edge of the corresponding groove part.

11. Sleeve in accordance with claim 1 **characterized by** having at least one outlet closable between the inside of the circumferential groove and the outside.

12. Sleeve in accordance with claim 1 **characterized in that** the outlet is closed by a screw plug.
